# EUROPEAN PATENT APPLICATION

(11) **EP 4 765 705 A1**
(43) Date of publication of application: **24.06.2026**
(21) Application number: 23948857.0
(22) Date of filing: 16.08.2023
(51) Int. Cl.: H04L 5/00

(54) **DATA TRANSMISSION METHOD, FIRST DEVICE, AND SECOND DEVICE**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); XU, Weijie, Dongguan, Guangdong 523860 (CN)
(74) Representative: Aldridge, Henry Alexander
(86) International application number: PCT/CN2023/113401
(87) International publication number: WO 2025/035428

(57) **Abstract**

The present application relates to a data transmission method, a first device, a second device, a chip, a computer-readable storage medium, a computer program product, a computer program, and a communication system. The data transmission method comprises: a first device sending a plurality of first signals in a first period among a plurality of periods, wherein in the first period, time-domain positions of the plurality of first signals are different, and powers of the plurality of first signals are different, and each of the plurality of first signals is used for providing energy for a second device within a coverage range of the first signal, the energy being used for performing data transmission with the first device. In the embodiments of the present application, by means of power control, a plurality of second devices are enabled to communicate with a first device at different times, and therefore ordered and differentiated transmissions of a large number of second devices can be realized.

## Description

### TECHNICAL FIELD

Embodiments of the present disclosure relate to the field of communications, and more specifically, to a data transmission method, a first device, a second device, a chip, a computer-readable storage medium, a computer program product, a computer program, and a communication system.

### BACKGROUND

With the development of communication system technologies, the deployment and maintenance of a large number of devices can be currently supported in IoT (Internet of Things) scenarios such as logistics management, environmental monitoring, and intelligent control. When a large number of devices simultaneously perform wireless communication with the access device(s) in the network, congestion and interference may occur. It is necessary to consider how to achieve orderly and differentiated transmission of a large number of devices.

### SUMMARY

The embodiments of the present disclosure provide a data transmission method, which can achieve orderly and differentiated transmission of a large number of devices.

An embodiment of the present disclosure provides a data transmission method, which includes the following operation.

A first device sends a plurality of first signals during a first period among a plurality of periods, wherein, during the first period, time-domain positions of the plurality of first signals are different, and powers of the plurality of first signals are different; each first signal of the plurality of first signals is used to provide energy for a second device within a coverage range of the first signal, and the energy is used for data transmission with the first device.

An embodiment of the present disclosure provides a data transmission method, which includes the following operations.

A second device receives a first signal from a first device during a first period among a plurality of periods.

In a case where a power of the first signal or energy provided by the first signal satisfies a first condition, the second device performs data transmission with the first device based on the energy provided by the first signal.

An embodiment of the present disclosure provides a first device, which includes a first communication module.

The first communication module is configured to send a plurality of first signals during a first period among a plurality of periods; during the first period, time-domain positions of the plurality of first signals are different, and powers of the plurality of first signals are different; each first signal of the plurality of first signals is used to provide energy for a second device within a coverage range of the first signal, and the energy is used for data transmission with the first device.

An embodiment of the present disclosure provides a second device, which includes a second communication module.

The second communication module is configured to receive a first signal from a first device during a first period among a plurality of periods.

The second communication module is further configured to perform data transmission with the first device based on energy provided by the first signal, in a case where a power of the first signal or the energy provided by the first signal satisfies a first condition.

An embodiment of the present disclosure provides a first device. The first device includes: a transceiver, a processor and a memory. Herein, the memory is configured to store a computer program, the transceiver is configured to communicate with other devices, and the processor is configured to call and run the computer program stored in the memory, to enable the first device to perform the aforementioned data transmission method.

An embodiment of the present disclosure provides a second device. The second device includes: a transceiver, a processor and a memory. Herein, the memory is configured to store a computer program, the transceiver is configured to communicate with other devices, and the processor is configured to call and run the computer program stored in the memory, to enable the second device to perform the aforementioned data transmission method.

An embodiment of the present disclosure provides a chip for implementing the aforementioned data transmission method.

Specifically, the chip includes a processor, which is configured to call and run a computer program from a memory, to enable a device installed with the chip to perform each of the aforementioned data transmission methods.

An embodiment of the present disclosure provides a computer-readable storage medium which is configured to store a computer program. When the computer program is run by a device, the device is enabled to perform each of the aforementioned data transmission methods.

An embodiment of the present disclosure provides a computer program product, and the computer program product includes computer program instructions. The computer program instructions enable a computer to perform each of the aforementioned data transmission methods.

An embodiment of the present disclosure provides a computer program. When running on a computer, the computer program enables the computer to perform each of the aforementioned data transmission methods.

In the embodiments of the present disclosure, through power control, the plurality of second devices can be enabled to communicate with the first device at different times, thereby achieving orderly and differentiated transmission of a large number of second devices.

### BRIEF DESCRIPTION OF THE DRAWINGS

FIG. 1 is a schematic diagram of a communication system according to an embodiment of the present disclosure.
FIG. 2 is a schematic diagram of a zero-power communication system according to an embodiment of the present disclosure.
FIG. 3 is a schematic diagram of radio frequency power harvesting.
FIG. 4 is a schematic diagram of back scattering communication.
FIG. 5 is a schematic diagram of resistance load modulation.
FIG. 6A is a schematic diagram of Non-return-to-zero Code (NRZ) coding.
FIG. 6B is a schematic diagram of Manchester coding.
FIG. 6C is a schematic diagram of unipolar return-to-zero coding.
FIG. 6D is a schematic diagram of Differential Binary Phase (DBP) coding.
FIG. 6E is a schematic diagram of Miller coding.
FIG. 7 is a schematic diagram of an interaction process between an access device and a zero-power device.
FIG. 8 is a schematic flowchart of a data transmission method according to an embodiment of the present disclosure.
FIG. 9 is a schematic diagram of a coverage range of a first signal according to an embodiment of the present disclosure.
FIG. 10 is a schematic flowchart of a data transmission method according to another embodiment of the present disclosure.
FIG. 11 is a schematic diagram of modulation for a signal/information sequence according to an embodiment of the present disclosure.
FIG. 12 is a schematic diagram of a registration process in some application examples according to an embodiment of the present disclosure.
FIG. 13 is a schematic block diagram of a first device according to an embodiment of the present disclosure.
FIG. 14 is a schematic block diagram of a second device according to an embodiment of the present disclosure.
FIG. 15 is a schematic block diagram of a second device according to another embodiment of the present disclosure.
FIG. 16 is a schematic block diagram of a second device according to yet another embodiment of the present disclosure.
FIG. 17 is a schematic block diagram of a second device according to still another embodiment of the present disclosure.
FIG. 18 is a schematic block diagram of a communication device according to an embodiment of the present disclosure.
FIG. 19 is a schematic block diagram of a chip according to an embodiment of the present disclosure.
FIG. 20 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure.

The technical solutions in the embodiments of the present disclosure may be applied to various communication systems, such as a Long Term Evolution (LTE) system, an Advanced long term evolution (LTE-A) system, a New Radio (NR) system, an evolution system in the NR system, a LTE-based access to unlicensed spectrum (LTE-U) system, a NR-based access to unlicensed spectrum (NR-U), a Non-Terrestrial Networks (NTN) system, a Universal Mobile Telecommunication System (UMTS), a Wireless Local Area Networks (WLAN), a Wireless Fidelity (WiFi), a 5th-Generation (5G) system, or other communication systems, etc.

Typically, the conventional communication systems support a limited number of connections and are easy to be implemented. However, with the development of communication technology, the mobile communication systems may support not only conventional communications, but also support, for example, Device to Device (D2D) communication, Machine to Machine (M2M) communication, Machine Type Communication (MTC), Vehicle to Vehicle (V2V) communication, Vehicle-to-everything (V2X) communication, and the like. The embodiments of the present disclosure may also be applied to such communication systems.

In an implementation, the communication system in the embodiments of the present disclosure may be applied to a Carrier Aggregation (CA) scenario, a Dual Connectivity (DC) scenario, or a Standalone (SA) network layout scenario.

In an implementation, the communication system in the embodiments of the present disclosure may be applied to an unlicensed spectrum, where the unlicensed spectrum may also be regarded as a shared spectrum. Alternatively, the communication system in the embodiments of the present disclosure may be applied to a licensed spectrum, where the licensed spectrum may also be regarded as a non-shared spectrum.

The embodiments of the present disclosure describe various embodiments in combination with a network device and a terminal device. Herein, the terminal device may also be referred to as User Equipment (UE), an access terminal, a subscriber unit, a subscriber station, a mobile station, a mobile platform, a remote station, a remote terminal, a mobile device, a user terminal, a terminal, a wireless communication device, a user agent or a user device, or the like.

The terminal device may be a STAION (ST) in a WLAN, which may be a cellular telephone, a cordless telephone, a Session Initiation Protocol (SIP) telephone, a Wireless Local Loop (WLL) station, a Personal Digital Assistant (PDA) device, a handheld device having wireless communication function, a computing device or other processing devices connected to a wireless modem, an vehicle-mounted device, a wearable device, a terminal device in a next generation communication system such as an NR network, a terminal device in a future evolutional Public Land Mobile Network (PLMN) network, or the like.

In the embodiments of the present disclosure, the terminal device may be deployed on land, including indoor or outdoor, handheld, wearable, or vehicle-mounted. The terminal device may also be deployed on the water (such as ships). Moreover, the terminal device may also be deployed in the air (e.g., on an aircraft, balloon and satellite, etc.).

In the embodiments of the present disclosure, the terminal device may be a mobile phone, a tablet (Pad), a computer with a wireless transceiving function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example and not limitation, in the embodiments of the present disclosure, the terminal device may also be a wearable device. The wearable device may also be referred to as a wearable smart device, which is a generic name of the wearable devices that are intelligently designed and developed by applying wearable technologies to daily wear, such as glasses, gloves, watches, clothing and shoes. The wearable device is a portable device that is worn directly on the body or integrated into the clothes or accessories of the user. The wearable device may be not only a kind of hardware device, but also realize powerful functions through software support, data interaction and cloud interaction. Generalized wearable smart devices have features of full functions and large size, and may realize complete or partial functions without relying on smart phones, such as a smart watch or smart glasses, as well as those only focus on a certain type of application functions and need to be used in cooperation with other devices (e.g., smart phones), such as various smart bracelets and smart jewelleries for physical sign monitoring.

In the embodiments of the present disclosure, the network device may be a device for communicating with a mobile device. The network device may be an Access Point (AP) in a WLAN, an Evolutional Node B (eNB or eNodeB) in a LTE, a relay station or an AP, a vehicle-mounted device, a wearable device, a network device (gNB) in an NR network, a network device in a future evolutional PLMN network, or a network device in an NTN network, or the like.

As an example and not limitation, in the embodiments of the present disclosure, the network device may have mobile characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on a land, a water area, or the like.

In the embodiments of the present disclosure, the network device may provide service(s) for a cell, and the terminal device may communicate with the network device through a transmission resource (e.g., frequency-domain resource or spectrum resource) used by the cell. The cell may be the cell corresponding to the network device (e.g., a base station), and the cell may belong to a macro base station or a base station corresponding to a Small cell. The small cell herein may include: a metro cell, a micro cell, a pico cell, a femto cell, etc. Such small cells have the characteristics of small coverage range and low transmission power, and are suitable for providing high-rate data transmission service(s).

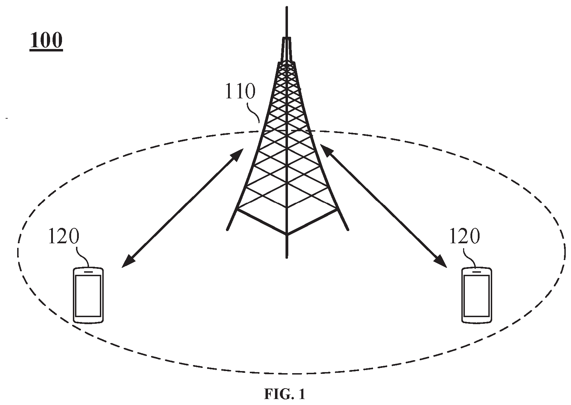

Exemplarily, FIG. 1 illustrates a communication system 100. The communication system includes one network device 110 and two terminal devices 120. In an implementation, the communication system 100 may include multiple network devices 110, and another number of terminal devices 120 may be included within the coverage range of each network device 110, which is not limited in the embodiments of the present disclosure.

In an implementation, the communication system 100 may further include other network entities such as a mobility management entity (MME) and access and mobility management function (AMF), which are not limited in the embodiments of the present disclosure.

Herein, the network device may further include an access network device and a core network device. That is, the wireless communication system may further include multiple core networks for communicating with the access network device. The access network device may be an evolutional base station (evolutional node B, abbreviated as eNB or e-NodeB), a macro base station, a micro base station (also known as a "small base station"), a pico base station, an access point (AP), a transmission point (TP), or a new generation base station (new generation Node B, gNodeB) in a long-term evolution (LTE) system, a next generation mobile communication (next radio (NR)) system, or an authorized auxiliary access long-term evolution (LAA-LTE) system.

It should be understood that, in the embodiments of the present disclosure, the device having the communication function in the network/system may be referred to as the communication device. Taking the communication system shown in FIG. 1 as an example, the communication device may include the network device and the terminal device both having the communication function. The network device and the terminal device may be specific devices in the embodiments of the present disclosure, which are not described repeatedly herein. The communication device may further include other devices in the communication system, such as the network controller and the mobility management entity, which are not limited in the embodiments of the present disclosure.

It should be understood that the terms "system" and "network" in the present disclosure may be generally used interchangeably herein. In the present disclosure, the term "and/or" only indicates an association relationship for describing associated objects and represents that there are three relationships. For example, A and/or B may represent three conditions: i.e., independent existence of A, existence of both A and B and independent existence of B. In addition, the character "/" in the present disclosure typically represents that previous and next associated objects form an "or" relationship.

It should also be understood that the term "indicate" referred to in the embodiments of the present disclosure may be a direct indication or an indirect indication, and may also be indicative of an associated relationship. For example, A indicates B, which may mean that A directly indicates B, e.g., B may be acquired through A. It may further mean that A indirectly indicates B, e.g., A indicates C, and B may be acquired through C. It may further mean that there is an association between A and B.

In the description of the embodiments of the present disclosure, the term "corresponding" may represent that there is a direct correspondence or an indirect correspondence between the two objects, or may further represent that there is an association relationship between the two objects, a relationship between the indication and the object to be indicated, or a relationship between the configuration and the object to be configured, or the like.

To facilitate understanding of the technical solutions of the embodiments of the present disclosure, the relevant technologies of the embodiments of the present disclosure are described below. The following relevant technologies, as optional solutions, may be combined with the technical solutions of the embodiments of the present disclosure in any manner, and all belong to the protection scope of the embodiments of the present disclosure.

### (I). Communication based on zero-power device

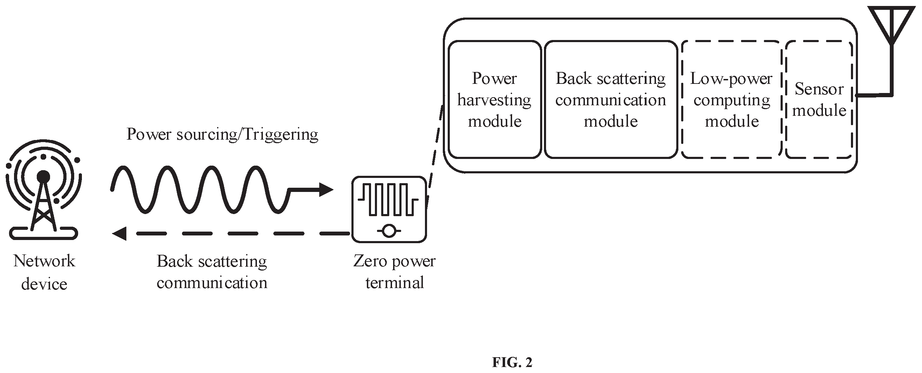

Power harvesting technology and back scattering communication technology are applied in the zero-power communication. FIG. 2 illustrates a schematic diagram of a zero-power communication system. As illustrated in FIG. 2, the zero-power communication system includes a network device 210 and a zero-power device 220 (e.g., also be called a zero-power terminal). Herein, the network device 210 is configured to transmit a wireless power supply signal and a downlink communication signal (e.g., a triggering signal) to the zero-power device 220, and also receive a back scattering signal from the zero-power device 220. A basic zero-power device 220 includes a power harvesting module, a back scattering communication module and a low-power computing module. In addition, the zero-power device 220 may further include a memory or sensor, which is used for storing some basic information (such as item identification, etc.) or acquiring the sensing data such as ambient temperature and ambient humidity.

The key technologies in the zero-power communication mainly include radio frequency power harvesting technology and back scattering communication technology,

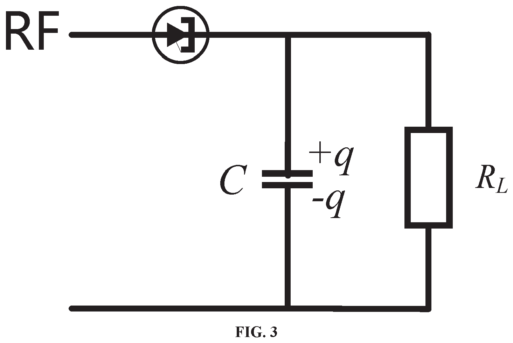

FIG. 3 illustrates a schematic diagram of radio frequency (RF) power harvesting. As illustrated in FIG. 3, the RF power harvesting module harvests the energy of the electromagnetic wave in space based on a principle of electromagnetic induction; and further acquires the energy required for driving the operation of the zero-power device, such as driving low-power demodulation and modulation modules, reading of the sensors and memory, and the like. Therefore, the zero-power device may not require a conventional battery.

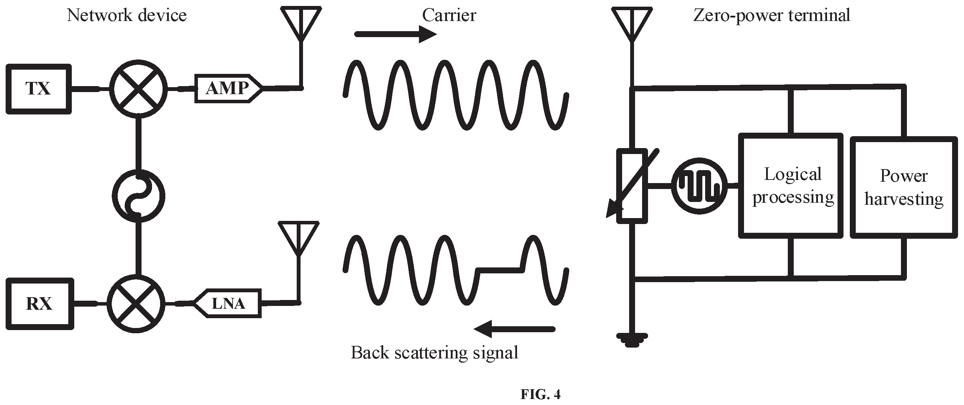

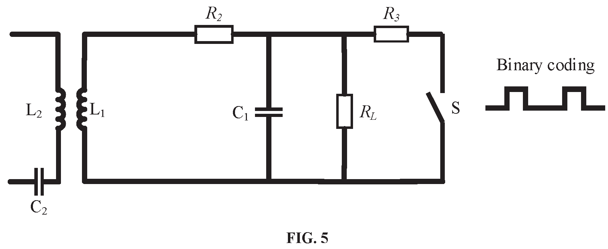

FIG. 4 illustrates a schematic diagram of back scattering communication. As illustrated in FIG. 4, the zero-power terminal receives a wireless signal from the network, modulates the wireless signal, loads information to be transmitted, and radiates the modulated signal through an antenna. Such information transmission process is referred to as back scattering communication. The back scattering is closely related to load modulation functions. The modulation process is completed by adjusting and controlling circuit parameters of an oscillation loop of the zero-power device according to a beat of a data stream, to cause the parameters such as the size of impedance of an electronic tag to be changed accordingly. The load modulation technology mainly includes resistance load modulation and capacitance load modulation. FIG. 5 illustrates a schematic diagram of resistance load modulation. As illustrated in FIG. 5, in the resistance load modulation, a resistor R₃ is connected in parallel to a load R_{L}, and the resistor R₃ is turned on or off based on the control of a binary data stream (e.g., realizing turning-on or turning-off by controlling the switch S). The turning-on or turning-off of the resistor may cause the change of the circuit voltage, so that amplitude shift keying (ASK) modulation can be realized. That is, the modulation and transmission of the signal can be realized by adjusting the amplitude of the back scattering signal of the zero-power device. Similarly, in capacitance load modulation, a change of a resonant frequency of the circuit may be implemented by turning on and turning off a capacitor, so that frequency shift keying (FSK) modulation can be realized. That is, the modulation and transmission of the signal can be realized by adjusting the operating frequency of the back scattering signal of the zero-power device.

It may be seen that the zero-power device modulates information of the incoming signal by means of load modulation, thereby realizing the process of the back scattering communication. Therefore, the zero-power device has following significant advantages.
1, The terminal does not actively transmit the signal, thus, complex radio frequency links (such as power amplifiers (PA), radio frequency filters) are unnecessary.
2, The terminal is not require to actively generate a high-frequency signal, thus, thus, a high-frequency crystal oscillator is unnecessary.
3, By means of back scattering communication, the signal transmission of the terminal does not need to consume the power of the terminal itself.

### (II) Application scenarios of zero-power communication

Due to the significant advantages such as extremely low cost, zero power consumption, and small size, the zero-power communication can be widely applied in various industries. For example, the zero-power communication may be used in vertical industries such as logistics, smart warehousing, smart agriculture, energy and power, and the industrial Internet. Additionally, the zero-power communication may also be applied in personal applications such as smart wearable and smart home.

### (III) Coding manners of zero-power communication

The data transmitted by the zero-power terminal (such as the electronic tag) may represent binary "1" and "0" by using codes in different forms. Wireless radio frequency identification systems typically employ one of the following coding manners: Non-return-to-zero Code (NRZ) coding, Manchester coding, Unipolar RZ coding, Differential Binary Phase (DBP) coding, Miller coding, and differential coding. Generally speaking, 0 and 1 are represented by using different pulse signals.

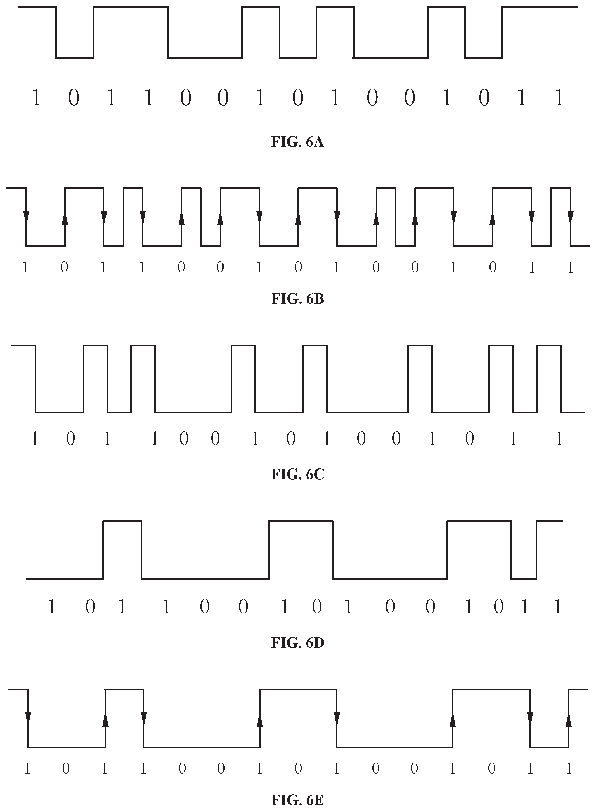

FIG. 6A illustrates a schematic diagram of NRZ coding. As shown in FIG. 6A, in the NRZ coding, a high level is used to represent binary "1", and a low level is used to represent binary "0".

FIG. 6B illustrates a schematic diagram of Manchester coding. The Manchester coding is also known as Split-Phase Coding. As shown in FIG. 6B, in the Manchester coding, the value of a certain bit is represented by a level change (rising/falling) at a half of a bit period within the bit length. A negative transition at the half of the bit period represents binary "1", and a positive transition at the half of the bit period represents binary "0". When using load modulation or backscatter modulation of the carrier, the Manchester coding is typically used for data transmission from the electronic tag to the reader, as it is conducive to detecting error(s) in the data transmission. This is because the state of "no change" is not allowed within the bit length. When the data bits simultaneously sent by multiple electronic tags have different values, the received rising edge and falling edge cancel each other out, which results in an uninterrupted carrier signal throughout the entire bit length. Since this state is not allowed, the reader can use such error to determine the specific location where the collision occurs.

FIG. 6C illustrates a schematic diagram of unipolar return-to-zero coding. As shown in FIG. 6C, in the unipolar return-to-zero coding, a high level within a first half of a bit period represents binary "1", while a low-level signal lasting throughout the entire bit period represents binary "0". The unipolar return-to-zero coding can be used to extract the bit synchronization signal.

FIG. 6D illustrates a schematic diagram of DBP coding. As shown in FIG. 6D, in the DBP coding, any edge within a half of a bit period represents binary "0", while the absence of the edge represents binary "1". In addition, the level is inverted at a beginning of each bit period. Therefore, for the receiver, it is relatively easy to reconstruct the bit beat.

FIG. 6E illustrates a schematic diagram of Miller coding. As shown in FIG. 6E, in the Miller coding, any edge within a half of a bit period represents binary "1", while an unchanged level throughout a next bit period represents binary "0". A level transition occurs at a beginning of the bit period. Therefore, for the receiver, it is relatively easy to reconstruct the bit beat.

### (IV) Classification of zero-power terminals

On the basis of power sources and usage modes of zero-power terminals, the zero-power terminals may be classified into the following types.

### (1) Passive zero-power terminal

The zero-power terminal does not require a built-in battery. When the zero-power device approaches the network device, the zero-power device is located in a near field range formed by the radiation of the antenna of the network device. Herein, the network device may be for example a reader of radio frequency identification (RFID) system, etc. Therefore, an induced current is generated by the antenna of the zero-power device through the electromagnetic induction, and the induced current drives a low-power chip circuit of the zero-power device. Operations such as the demodulation of a forward link signal as well as the modulation of a backward link signal can be realized. For the back scattering link, the zero-power device can implement the signal transmission in the back scattering manner.

It can be seen that the passive zero-power device does not need the built-in battery to drive either the forward link or the backward link. Thus, the passive zero-power device is a real zero-power device.

The passive zero-power device does not need the battery, the RF circuit and baseband circuit thereof are very simple, and the passive zero-power device does not need devices such as a low noise amplifier (LNA), a power amplifier (PA), a crystal oscillator, an analog to digital converter (ADC), and the like. Therefore, the passive zero-power device has many advantages such as a small size, a light weight, an extremely low price, and a long service life.

The passive zero-power device may also support other power harvesting manners to harvest the ambient power (such as photovoltaic energy, thermal energy, kinetic energy, and mechanical energy, etc.). Thus, the power for driving the circuitry can be acquired, and the communication of the terminal device can be supported.

### (2) Semi-passive zero-power device

The semi-passive zero-power device is not equipped with a conventional battery, but the RF power harvesting module may be used to harvest the radio wave power, or harvest the ambient power (such as solar energy, thermal energy and mechanical vibration energy, etc.); and the RF power harvesting module may further store the harvested power in a power storage unit (such as a capacitor). After acquiring the power, the power storage unit may drive the low-power chip circuit of the zero-power device. The operations such as the demodulation of the forward link signal and the modulation of the backward link signal can be realized. For the back scattering link, the zero-power device can implement the signal transmission in the back scattering manner.

It can be seen that the semi-passive zero-power device does not need the built-in battery to drive either the forward link or the backward link. Although the power stored in the capacitor is used during the operation, the power is derived from the radio power harvested by the power harvesting module. Therefore, the semi-passive zero-power device is also a real zero-power device.

The semi-passive zero-power device inherits many advantages of the passive zero-power device. Thus, the semi-passive zero-power device has many advantages, such as a small size, a light weight, an extremely low price, and a long service life.

### (3) Active zero-power device

In some scenarios, the used zero-power device may also be an active zero-power device. Such type of terminals may have the built-in battery (a conventional battery, such as a dry battery and rechargeable lithium battery). The battery is used to drive the low-power chip circuit of the zero-power device. The operations such as the demodulation of the forward link signal and the modulation of the backward link signal can be realized. However, for the back scattering link, the zero-power device can implement the signal transmission in the back scattering manner. Therefore, the zero power aspect of such type of terminals mainly lies in that the signal transmission in the backward link does not require the power of the terminal itself, but uses the back scattering manner. Although the active zero-power device uses the battery, the power consumption of the active zero-power device is very low due to the sampling of ultra-low power communication technology. As such, compared with existing technologies, the working life of the battery can be significantly extended.

The active zero-power device supplies the power to the RFID chip through the built-in battery, thereby increasing the reading/writing distance of the tag, and further improving communication reliability. Therefore, the active zero-power terminal can be applied to some scenarios with relatively high requirements on the communication distance, the reading latency, etc.

Some zero-power devices, such as semi-passive zero-power devices or active zero-power devices, can have active transmission capabilities. That is, in addition to communication in the back scattering manner, the backward link may also perform communication in the active transmission manner.

As is well known, the service types of zero-power IoT are similar to other IoT service types, and also primarily focus on uplink services. Based on transmitter types of the zero-power devices, the zero-power devices may be classified as follows.

### (1) Zero-power device based on back scattering

Such type of zero-power device transmits uplink data by using the foregoing back scattering manner. Such type of device does not have an active transmitter for active transmission, but only have a transmitter for back scattering. Therefore, when such type of terminal transmits the data, the network device is required to provide a carrier. Such type of the terminal device performs the back scattering based on the carrier, to further realize the data transmission.

### (2) Zero-power device based on active transmitter

Such type of zero-power device transmits uplink data by using an active transmitter with an active transmission capability. Therefore, during the data transmission, such type of zero-power device may transmit the data by using its own active transmitter without the need for the carrier provided by the network device. The active transmitter suitable for the zero-power device may include, for example, an ultra-low-power ASK transmitter, an ultra-low-power FSK transmitter, or the like. Based on the current implementation, in a case where such transmitter transmits a signal of 100 microwatt (uw), the overall power consumption can be reduced to 400 uw to 600 uw.

### (3) Zero-power device with both back scattering and active transmitter

Such type of terminal may support both the back scattering and the active transmitter. Based on different conditions (e.g., power status and available ambient power) or the scheduling by the network device, the terminal may determine which transmission manner for the uplink signal to be used, i.e., using the back scattering manner or the active transmitter to perform the active transmission.

### (V) Cellular passive Internet of Things

The cellular Internet of Things is booming. Currently, IoT technologies such as Narrow Band Internet of Things (NB-IoT), MTC, and Reduced Capability (RedCap) have been standardized. However, there are still many IoT communication requirements in various scenarios that cannot be satisfied by existing technologies. For example:

### 1, Harsh communication environments

Some IoT scenarios may face extreme conditions, such as high temperature, extremely low temperature, high humidity, high pressure, high radiation, or high-speed motion; for example, in ultra-high voltage substations, for rail monitoring of high-speed trains, environmental monitoring in frigid regions, industrial production lines, etc. In these scenarios, the existing IoT terminals may not be operable due to the operating environment limitations of the conventional power supplies. In addition, the extreme operating environments are also not conductive to the maintenance of IoT, such as battery replacement.

### 2, Requirement for extremely small-size terminal forms

In some IoT communication scenarios, such as food traceability, commodity circulation, and smart wearable, the terminal is required to have an extremely small size to facilitate the usage in such scenarios. For example, an IoT terminal used for product management in the supply chain generally takes the form of electronic tags, which are embedded into product package in a very compact form. For another example, the lightweight wearable device can improve the user experience while meeting the needs of the user.

### 3, Ultra-low-cost IoT communication requirements

Many IoT communication scenarios require that the cost of the IoT terminal is low enough to improve competitiveness over other alternative technologies. For example, in logistics or warehousing scenarios, in order to facilitate management of a large quantity of circulating items, the IoT terminal may be attached to each item, so as to enable accurate management during the entire logistics process and the entire cycle through communication between the terminal and the logistics network. Such scenarios require the IoT terminal to be cost-competitive enough.

Therefore, in order to address these unmet IoT communication demands, there is a need to develop ultra-low-cost, extremely small-size, battery-free/maintenance-free IoT in the cellular network, and the zero-power IoT can precisely meet such requirements.

It should be additionally noted that, during the standardization discussion, the zero-power IoT may also be referred to as an ambient power supported IoT or ambient power IoT (Ambient power enabled IoT, Ambient IoT). In some technical literatures, it is also called passive loT. The so-called ambient IoT (which may further be abbreviated as A-IoT) may refer to an IoT device that uses various types of ambient power (such as RF energy, photovoltaic energy, solar energy, thermal energy or mechanical energy). Such devices may have no power storage capability, or may have very limited power storage capability, such as using a capacitor with tens of microfarads (uF) of capacitance.

Based on the discussion of ambient IoT application scenarios, the ambient IoT may be used in at least the following four scenarios:
1. object identification, such as logistics, production-line product management, and supply chain management;
2. environmental monitoring, such as temperature, humidity and harmful gas monitoring in working environments and natural environments;
3. positioning, such as indoor positioning, smart item tracking, and production-line item positioning; and
4. intelligent control, such as intelligent control of various electric appliances in smart home (turning on/off an air conditioner, and adjusting temperature), and intelligent control of various facilities in agricultural greenhouse (automatic irrigation and fertilization).

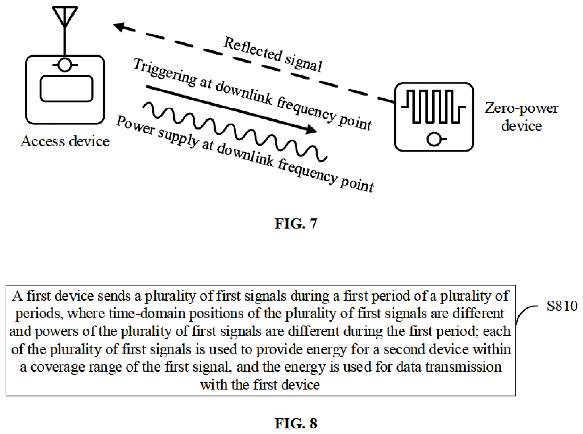

Conventional cellular network cannot communicate with the zero-power device. The terminal device(s) in the conventional cellular network require to be powered by the battery. If the zero-power device is supported in the cellular network, the power supply signal need to be provided through the network device or another source for the zero-power device to acquire energy. Upon receiving the downlink signal and acquiring the energy, the zero-power device may feed information back to an access device (such as the network device) in the network via backscattering on an UL frequency. FIG. 7 illustrates an interaction process between the access device and the zero-power device.

Due to the large coverage range of the network (such as zero-power IoT or Ambient IoT), it may accommodate a relatively large number of zero-power devices. Within the network, once a large number of user devices acquire energy and use wireless communication resources for signal transmission or reception simultaneously, the congestion may occur. Differentiation on the reflected/backhaul signals from multiple user devices poses a significant challenge. The larger the number of user devices, the more serious the mutual interference becomes, making the differentiation among the user devices increasingly difficult. Even if different time-frequency resources are used to differentiate the user devices, since the time-frequency division resources are relatively limited, it is still difficult to differentiate the user devices in the foregoing scenarios.

The technical solutions of the embodiments of the present disclosure can solve the above technical problems.

FIG. 8 is a schematic flowchart of a data transmission method according to an embodiment of present disclosure. The method can optionally be applied to the systems shown in FIG. 1 or FIG. 2, but is not limited to thereto. The method includes at least part of the following contents.

At block S810, the first device sends a plurality of first signals during a first period among a plurality of periods. Herein, during the first period, time-domain positions of the plurality of first signals are different, and powers of the plurality of first signals are different. Each first signal of the plurality of first signals is used to provide energy for a second device within a coverage range of the first signal, and the energy is used for data transmission with the first device.

Optionally, in the embodiments of the present disclosure, the first device may be an access device or a network device within a network, which needs to perform data transmission with a large number of second devices. Exemplarily, the network may be a zero-power network or an ambient power IoT network.

Optionally, in the embodiments of the present disclosure, the second device may be a user device or a terminal device. Exemplarily, the second device may be a zero-power device or an ambient power IoT device (Ambient IoT device). The zero-power device or ambient IoT device may include the device(s) that perform uplink transmission by using back scattering manner, and may also include the device(s) that perform uplink transmission by using active transmission manner, which is not limited in the present disclosure.

It should be noted that, although the zero-power network or the ambient power IoT network is taken as an example, the data transmission method in the embodiments of the present disclosure can also be applied to other types of networks. It can be understood that the data transmission method in the embodiments of the present disclosure may be applied to any network with the access requirements of multiple user devices.

Optionally, in the embodiments of the present disclosure, one period refers to a period in which the first device completes one data transmission with each second device within a specific range. In practical applications, the first device may use multiple periods to complete multiple data transmissions with each second device, thereby achieving periodic data transmission. For example, in a logistics or warehousing scenario, the first device may periodically perform the data transmission with each second device within a logistics network to achieve precise management of the item(s) attached by each second device. For another example, in an environmental monitoring scenario, the first device may periodically collect sensing information reported by each second device (sensor) within the monitoring space.

Optionally, the first period may be any one or each of the aforementioned plurality of periods. That is, during any one or each period, the first device may send the plurality of first signals at different time-domain positions by different powers. Herein, the first signal may include a power supply signal. Optionally, the waveform of the power supply signal may be a simple waveform, such as a sine wave waveform.

Optionally, the plurality of first signals may be sent on a plurality of first time slots, respectively. That is, the first signals with different powers may correspond to different time slots in the time domain of the downlink frequency.

Since the powers of the plurality of first signals are different, the coverage ranges of the plurality of signals are different. On such basis, the time-domain positions of plurality of signals are different. Therefore, for the plurality of second devices within different ranges (or a plurality of second devices at different distances from the first device), the times at which the second devices receive the first signal that satisfies the power requirement may be different, or the power of the first signal that is received by the second devices at the same time may be different. As such, the time to accumulate the energy required for the data transmission may be different. Based on this, the plurality of second devices may be grouped according to different powers. The second devices in different groups may receive the first signal that satisfies the power requirement at different times, or may accumulate the energy required for data transmission at different times, thereby enabling the data transmission with the first device at different times. In other words, the first device can achieve wake-up/activation of the plurality of second devices in batches by sending the first signal at different time-domain positions by different powers.

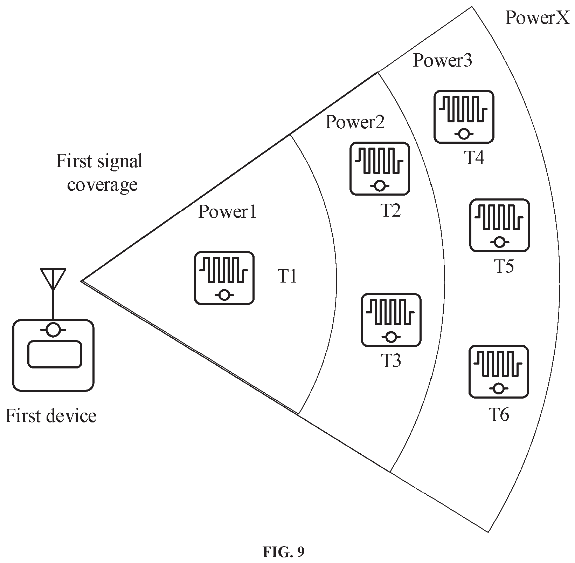

As an example, FIG. 9 illustrates a schematic diagram of a coverage range of the first signal according to an embodiment of the present disclosure. As shown in FIG. 9, within the coverage range of the first signal sent by the first device at a power x (the power x may be the preset maximum transmission power), the second devices T1 to T6 are deployed. Herein, taking T1 and T2 as examples, T1 is located within the coverage range of the first signal sent at the power T1, and T2 is located within the coverage range of the first signal sent at the power T2. Assuming that the first device firstly sends the first signal at the power T1, and then sends the first signal at the power T2, T1 may acquire the energy provided by the first signal earlier than T2. In such way, T1 can perform the data transmission earlier than T2.

It can be seen that, based on the aforementioned data transmission method, during one period, the first device sends the plurality of first signals at different time-domain positions by different powers, thereby enabling the second devices located in different ranges to acquire the energy at different times, and further perform the data transmission with the first device at different times. In such way, through power control, the near-far effect can be used to achieve orderly and differentiated transmission of a large number of second devices, avoiding transmission conflicts and interference.

In some embodiments, the power of each first signal of the plurality of first signals may be related to a sending sequence of the plurality of first signals. Exemplarily, the power of each first signal may be determined based on a specific rule, and the rule may be related to the sending sequence. For example, the transmission powers of the plurality of first signals at a unit frequency may be a set of discrete values, which take the value of *Pₘₐₓ - x.* Here, *x* represents the value sequentially extracted from a preset set based on the sequence of the first signals.

In some embodiments, the power of each first signal of the plurality of first signals may increase sequentially during the first period. As shown in FIG. 9, the first device firstly sends the first signal at a relatively small power 1, which can only activate the device T1. Upon completing the data transmission, the device T1 does not perform the data transmission again during the first period. Then, the first device sends the first signal at a power 2, which is greater than the power 1. At this time, only the devices T2 and T3 are activated. Upon completing the data transmission, the devices T2 and T3 does not perform the data transmission again during the first period. Subsequently, the first device sends the first signal at a power 3, which is greater than the power 2. At this time, only the devices T4, T5 and T6 are activated.

It can be seen that, by sequentially increasing the power, based on the distance between the first device and each of the second devices, the second devices may be triggered to perform the data transmission in order of proximity to the first device, simplifying the design complexity of power control.

As an example, the power of the first signal may be *Pₘₐₓ* - *x* , where *x* = {-12dB, -9dB, *-6dB, -3dB,* 0*dB*}, that is, *x* represent the value sequentially extracted from the set {-12dB, *-9dB, -6dB, -3dB,* 0*dB*} based on the sending sequence of the first signals. In such way, the powers of multiple signals increase sequentially during the first period.

In some embodiments, the powers of the plurality of first signals sent by the first device during each period of the plurality of periods may have an identical sorting rule. For example, the powers of the plurality of first signals sent during each period may increase sequentially. In such way, during each period, the second devices may perform the data transmission with the first device based on the same rule, which can simplify the design complexity of power control.

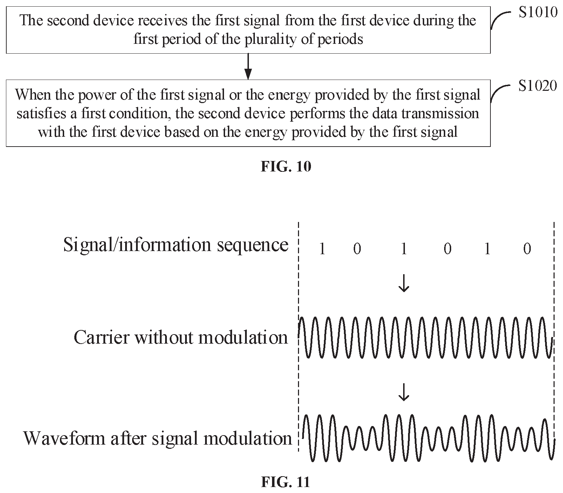

Corresponding to the above method, the embodiments of the present disclosure also provide a data transmission method performed by a second device. FIG. 10 is a schematic flowchart of a data transmission method according to another embodiment of the present disclosure. The method may optionally be applied to the system shown in FIG. 1 or 2, but is not limited thereto. The method includes at least part of the following contents.

At block S1010, the second device receives a first signal from a first device during a first period among a plurality of periods.

At block S 1020, in a case where a power of the first signal or energy provided by the first signal satisfies a first condition, the second device performs data transmission with the first device based on the energy provided by the first signal.

Herein, the first signal may include a power supply signal. Optionally, the waveform of the power supply signal may be a simple waveform, such as a sine wave waveform.

Since the second device performs the data transmission with the first device based on the energy provided by the first signal, in a case where the power of the first signal or the energy provided by the first signal satisfies the first condition, the power control can be used to enable different second devices to satisfy the first condition at different times. Thereby, the orderly and differentiated transmission of a large number of second devices can be realized.

Exemplarily, the time at which the second device satisfies the first condition may be related to the distance between the second device and the first device. In such way, a plurality of second devices may be grouped based on the distance, which can enable the second devices in different groups to satisfy the first condition at different times. Thereby, the orderly and differentiated transmission of a large number of second devices can be realized.

Optionally, as in the foregoing embodiments, the first signal may be one of a plurality of first signals sent by the first device at different time-domain positions by different powers. In such way, the times at which the second devices in different ranges (or the second devices with different distances from the first device) satisfy the first condition may be different. Thereby, the orderly and differentiated transmission of a large number of second devices can be realized.

Optionally, other technical details in the embodiment may also be implemented by reference to the foregoing embodiments, and are not described in detail herein.

Optionally, in a case where the second device completes one data transmission with the first device during the first period, the second device does not perform the data transmission again during the first period, to avoid subsequent transmission conflicts or interference with other second devices that also satisfy the first condition. Further, the second device may perform the data transmission again in a next period following the first period, thereby realizing periodic data transmission.

In some embodiments, the first condition may include that: the energy accumulated by the second device based on the first signal is greater than a first threshold. Herein, the first threshold may be a preset energy threshold. For example, the first threshold may be 0.1 Joule (J), 0.01 J, 0.001 J, or 0.0001 J, etc.

In some embodiments, the first condition may include that: the power of the first signal received by the second device is greater than a second threshold. Herein, the second threshold may be a preset power threshold. For example, the second threshold may be -20 decibel milliwatt (dBm), -40 dBm, -60 dBm, or -80 dBm, etc.

In some embodiments, the first condition may include that: the power of the first signal received by the second device is greater than the second threshold, and the energy accumulated by the second device based on the first signal is greater than the first threshold. That is, the second device needs to perform the data transmission when the power of the received first signal is greater than the second threshold, and the energy accumulated by the second device based on the first signal is greater than the first threshold. It should be noted that those skilled in the art can flexibly configure other settings for the first condition according to actual requirements to control the orderly transmission of a large number of second devices through power or energy accumulation. The embodiments of the present disclosure are not limited thereto.

Optionally, when the power of the first signal or the energy provided by the first signal does not satisfy the first condition, the second device may continue to receive or detect the first signal.

Specifically, the second device may determine whether the first condition is satisfied based on the reception of the first signal in each time slot during the first period. If the first condition is satisfied, the data transmission with the first device may be performed; if the first condition is not satisfied, the first signal may be detected in the next time slot during the first period.

In some embodiments, the first device may send a trigger message during the first period, to trigger the second device to perform the data transmission with the first device. Specifically, the above data transmission method may further include that: the first device sends the trigger message during the first period, where the trigger message is used to indicate the second device that detects the trigger message to perform the data transmission with the first device.

Optionally, the second device may detect the trigger message in a case where the first condition is satisfied, so as to perform the data transmission with the first device based on the trigger message. That is, the above data transmission method performed by the second device may further include that: in a case where the first condition is satisfied, the second device detects the trigger message sent by the first device, where the trigger message is used to indicate the second device to perform the data transmission with the first device.

In some embodiments, the trigger message may be used to indicate a time-frequency resource for the second device to perform the data transmission with the first device.

In one implementation, the trigger message may include resource indication information, and the resource indication information is used for the second device to determine the time-frequency resource for the data transmission with the first device. Correspondingly, the above data transmission method performed by the second device may further include that: the second device determines, based on the resource indication information in the trigger message, the time-frequency resource for the data transmission with the first device.

In another implementation, the trigger message may implicitly indicate the time-frequency resource for the data transmission between the second device and the first device. Specifically, the time-frequency resource of the trigger message may be used to determine the time-frequency resource for the second device to perform the data transmission with the first device. Correspondingly, the above data transmission method performed by the second device may further include that: the second device determines, based on a time-frequency resource of the trigger message, the time-frequency resource for the data transmission with the first device.

Exemplarily, the frequency-domain resource of the trigger message may be used to determine the frequency-domain resource for the second device to perform the data transmission with the first device. Specifically, the second device may determine, based on the frequency-domain resource of the trigger message and a preset offset value, the frequency-domain resource for the data transmission with the first device.

Exemplarily, the time-domain resource of the trigger message may be used to determine the time-domain resource for the second device to perform the data transmission with the first device. Specifically, the second device may determine the time-domain resource for the data transmission with the first device based on the time-domain resource of the trigger message and the preset offset value.

In some embodiments, the operation of the second device performing the data transmission with the first device may include that: the second device receives downlink data from the first device and/or the second device sends uplink data to the first device. Correspondingly, the second device may determine, based on the trigger message, the time-frequency resource for receiving the downlink data and/or the time-frequency resource for sending the uplink data. Exemplarily, the resource indication information in the trigger message may include time-domain resource indication information and/or frequency-domain resource indication information. Alternatively, the second device may determine the time-frequency resource for receiving the downlink data based on the time-frequency resource of the trigger message and a first offset value, and determine the time-frequency resource for sending the uplink data based on the time-frequency resource of the trigger message and a second offset value.

In some embodiments, the trigger message may further include an Identifier (ID) of the second device; and the ID is used for the second device to determine that the trigger message is used to indicate the second device to perform the data transmission with the first device. In other words, the ID is used to indicate the second device corresponding to the trigger message, so that the second device can identify the trigger message and further perform the data transmission based on the trigger message.

Correspondingly, the operation of the second device performing the data transmission with the first device based on the energy provided by the first signal may include that: the second device performs the data transmission with the first device based on the energy provided by the first signal, in a case where the trigger message includes the ID of the second device.

Exemplarily, the aforementioned ID may be the inherent ID of the second device, or the ID of the second device that is previously registered in the network, etc.

Optionally, the first device may determine, based on a deployment position of the second device, the time-domain position at which the second device satisfies the first condition, so that the first device may send the trigger message for the second device at the time-domain position. Herein, the trigger message carries the ID of the second device.

It should be noted that, in practical applications, the trigger message may not include the ID of the second device, that is, each trigger message sent by the first device may be indistinguishable for each second device. For example, the first device may send the trigger message in each time slot during the first period. The trigger message may be used to indicate the time-frequency resource in the time slot for the second device that satisfies the first condition to perform the data transmission with the first device.

Optionally, in any of the above embodiments, one or more of the following may be a modulated signal of a binary sequence: the trigger message, the downlink data sent by the first device to the second device, and the uplink data sent by the second device to the first device. Herein, the binary sequence may be, for example, a Pseudo-noise (PN) sequence, a Gold sequence (a type of pseudo-random sequence), an M sequence (a maximum length linear shift register sequence), a Hadamard sequence, or other sequences, etc.

Optionally, in any of the above embodiments, one or more of the following may be acquired through amplitude modulation, frequency modulation, or phase modulation: the trigger message, the downlink data sent by the first device to the second device, and the uplink data sent by the second device to the first device. FIG. 11 illustrates a schematic diagram of modulation for a signal/information sequence according to an embodiment of the present disclosure, which illustrates the signal/information sequence to be modulated (such as the trigger message, downlink data, or uplink data), the corresponding carrier without modulation, and the waveform after modulation.

Optionally, the aforementioned trigger message may be carried by the first signal. In other words, the trigger message and the power supply signal may be the same signal.

It should be understood that, in some embodiments, the first device may not send the trigger message. That is, the second device may receive the downlink data and send the uplink data in a case where the first condition is satisfied. Those skilled in the art can make settings according to the scenario requirements.

In some application examples, after the second device satisfies the first condition, the process of detecting the trigger message and performing the data transmission can be regarded as a registration process of the second device.

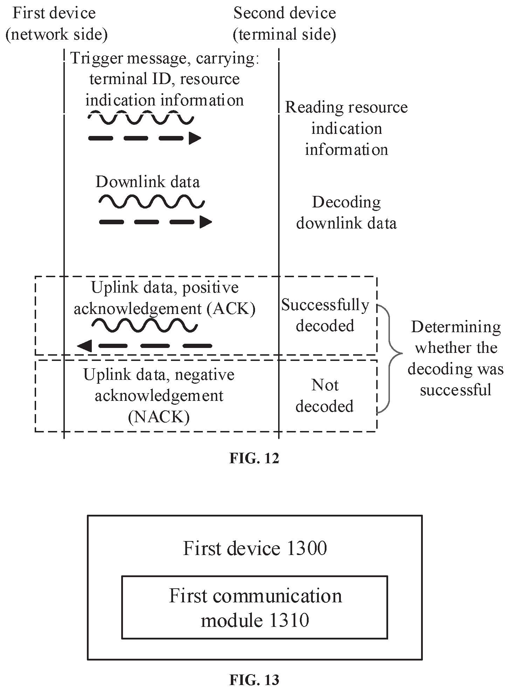

FIG. 12 illustrates a schematic diagram of a registration process in some application examples according to an embodiment of the present disclosure. As shown in FIG. 12, the first device sends the trigger message. Here, the trigger message may carry a terminal 1D, resource indication information, etc. The second device receives the trigger message, decodes the terminal ID in the trigger message, and determines, based on the ID, whether the trigger message is for the second device. In a case where the terminal ID is the trigger message for the second device, the second device reads the resource indication information; determines the time-frequency resource for downlink data based on the resource indication information; and receives and decodes the downlink data based on the time-frequency resource for the downlink data. The second device may also determine, based on the resource indication information, the time-frequency resource for uplink data; and further send the uplink data based on the time-frequency resource for the uplink data. Optionally, the second device may send the uplink data in the back scattering manner. Optionally, the uplink data may include feedback information of the second device for the downlink data. In a case where the second device successfully decodes the downlink data, the feedback information may include Acknowledgement (ACK) information. In a case where the second device fails to decode the downlink data, the feedback information may include Negative Acknowledgement (NACK) information. After successful registration, the second device does not register again until the next period.

It can be seen that, in the above application examples, the data information of different second devices can be differentiated based on the registration process, and the interference among the plurality of second devices can also be significantly avoided. At the same time, certain timing control may be provided through the trigger message to coordinate the time-domain structure of the uplink data and the downlink data, which can ensure that the terminal and the network can process information in time.

In some embodiments, the data transmission method may further include that: the first device sends a second signal during the first period, where the second signal is used to indicate to enter a second period among the plurality of periods.

Correspondingly, in some embodiments, the data transmission method may further include that: the second device receives the second signal from the first device, where the second signal is used to indicate to enter the second period among the plurality of periods.

Herein, the second signal may be understood as a period boundary signal. The second period may be a next period following the first period.

In a case where the second device is a zero-power device or an ambient power IoT device, the second device may not have enough energy to maintain the clock and determine, based on the clock, the starting time and end time of each period. According to the aforementioned embodiments, the first device sends the second signal to enable the second device to determine to enter the second period. In such way, the data transmission of the zero-power device or the ambient power IoT can be maintained across the plurality of periods.

In some embodiments, the second signal may include timing information, and the timing information may be used to determine a time-domain position of the second period. Correspondingly, in some embodiments, the data transmission method may further include that: the second device determines, based on the timing information in the second signal, the time-domain position of the second period.

Exemplarily, the time-domain position of the second period may include a starting time of the second period. For example, the timing information may indicate a time interval, and the second device may determine the starting time of the second period based on the current time moment and the time interval. Optionally, the time-domain position of the second period may also include an end time of the second period, which is not limited in the embodiments of the present disclosure.

In some embodiments, the second signal may also be used to indicate the second device to release energy. Correspondingly, in some embodiments, the data transmission method may further include that: the second device releases energy in a case where the second device receives the second signal. By releasing the energy, the second device can re-accumulate the energy during the second period. In such way, through power control, the plurality of second devices can send the data during the second period in batches.

In some embodiments, the power of the second signal is greater than or equal to the maximum power of the plurality of first signals. In such way, it can be ensured that all second devices within the coverage range of the plurality of first signals can receive the second signal and enter the second period.

It can be seen that the data transmission method in the embodiments of the present disclosure can control the wake-up and data transmission of the plurality of second devices during one period in different batches through power control. Each second device detects the period boundary signal to determine whether to continue detection and registration in the next period. Thus, the periodic, orderly and differentiated transmission of the plurality of second devices can be realized.

FIG. 13 is a schematic block diagram of a first device 1300 according to an embodiment of the present disclosure. The first device 1300 includes a first communication module 1310.

The first communication module 1310 is configured to send a plurality of first signals during a first period among a plurality of periods. Herein, during the first period, the time-domain positions of the plurality of first signals are different, and powers the plurality of first signals are different. Each first signal of the plurality of first signals is used to provide energy for a second device within a coverage range of the first signal, and the energy is used for data transmission with the first device.

In one implementation, during the first period, a power of each first signal of the plurality of first signals may be related to a sending sequence of the plurality of first signals.

In one implementation, the power of each first signal of the plurality of first signals may increase sequentially during the first period.

In one implementation, powers of the plurality of first signals sent by the first device during each period of the plurality of periods have an identical sorting rule.

In one implementation, the first communication module 1310 may be further configured to: send a trigger message during the first period; where the trigger message is used to indicate the second device that detects the trigger message to perform the data transmission with the first device.

In one implementation, the trigger message may include resource indication information; and the resource indication information may be used for the second device to determine the time-frequency resource for the data transmission with the first device.

In one implementation, the time-frequency resource of the trigger message may be used to determine the time-frequency resource for the data transmission between the second device and the first device.

In one implementation, the trigger message may also include an identifier (ID) of the second device; and the ID may be used for the second device to determine that the trigger message is used to indicate the second device to perform the data transmission with the first device.

In one implementation, the trigger message may be carried by the first signal.

In one implementation, the first communication module 1310 may be further configured to: send a second signal during the first period; where the second signal is used to indicate to enter a second period among the plurality of periods.

In one implementation, the second signal may include timing information, and the timing information may be used to determine a time-domain position of the second period.

In one implementation, the second signal may be further used to indicate the second device to release energy.

The first device 1300 in the embodiments of the present disclosure can implement the corresponding functions of the first device in the aforementioned method embodiments. The processes, functions, implementations, and beneficial effects corresponding to each module (sub-module, unit, component, etc.) in the first device 1300 can refer to the corresponding descriptions in the aforementioned method embodiments, and details are not repeated herein. It should be noted that the functions described for each module (sub-module, unit, component, etc.) in the first device 1300 of the embodiments of the present embodiments may be implemented by different modules (sub-modules, units, components, etc.), or may be implemented by the same module (sub-module, unit, component, etc.).

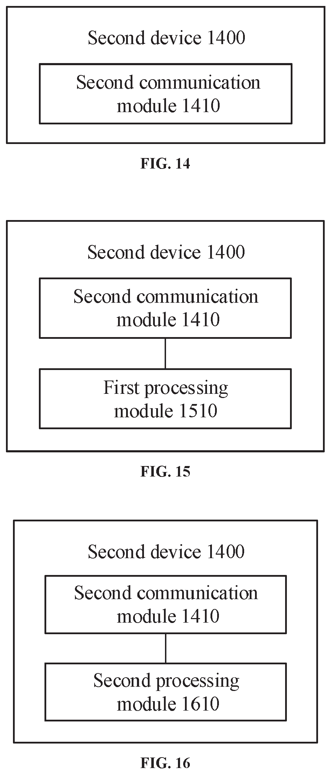

FIG. 14 is a schematic block diagram of a second device 1400 according to an embodiment of the present disclosure. The second device 1400 includes a second communication module 1410.

The second communication module 1410 is configured to receive a first signal from a first device during a first period among a plurality of periods; and perform data transmission with the first device based on energy provided by the first signal, in a case where a power of the first signal or the energy provided by the first signal satisfies a first condition.

In one implementation, the first condition may include at least one of the following:
energy accumulated by the second device based on the first signal is greater than a first threshold; or
the power of the first signal is greater than a second threshold.

In one implementation, as shown in FIG. 15, the second device 1400 may further include a first processing module 1510. The first processing module 1510 may be configured to detect a trigger message from the first device, in a case that the first condition is satisfied. Herein, the trigger message may be used to indicate to perform the data transmission with the first device.

In one implementation, the first processing module 1510 may be further configured to: determine a time-frequency resource for the data transmission with the first device based on resource indication information in the trigger message.

In one implementation, the first processing module 1510 may be further configured to: determine a time-frequency resource for the data transmission with the first device based on a time-frequency resource of the trigger message.

In one implementation, the second communication module 1410 may be further configured to: perform the data transmission with the first device based on the energy provided by the first signal, in a case where the trigger message comprises an identifier (ID) of the second device.

In one implementation, the trigger message may be carried by the first signal.

In one implementation, the second communication module 1410 may be further configured to: receive a second signal from the first device, where the second signal may be used to indicate to enter a second period among the plurality of periods.

In one implementation, as shown in FIG. 16, the second device 1400 may further include a second processing module 1610. The second processing module 1610 may be configured to: determine a time-domain position of the second period based on timing information in the second signal.

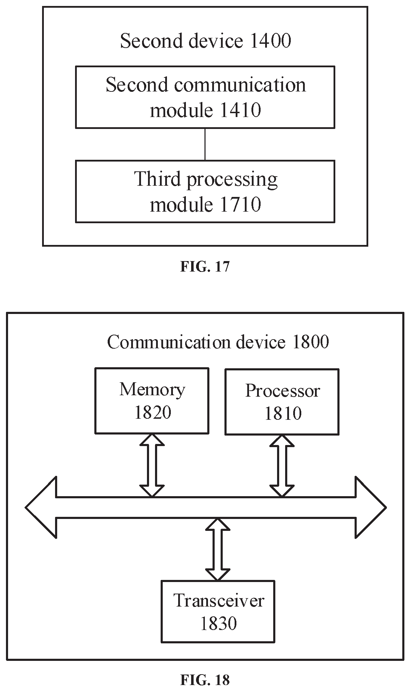

In one implementation, as shown in FIG. 17, the second device 1400 may further include a third processing module 1710. The third processing module 1710 may be configured to: release energy in a case where the second device receives the second signal.

The second device 1400 in the embodiments of the present disclosure can implement the corresponding functions of the second device in the aforementioned method embodiments. The processes, functions, implementations, and beneficial effects corresponding to each module (sub-module, unit, component, etc.) in the second device 1400 can refer to the corresponding descriptions in the aforementioned method embodiments, and details are not repeated herein. It should be noted that the functions described for each module (sub-module, unit, component, etc.) in the second device 1400 of the embodiments of the present embodiments may be implemented by different modules (sub-modules, units, components, etc.), or may be implemented by the same module (sub-module, unit, component, etc.).

FIG. 18 is a schematic structural diagram of a communication device 1800 according to an embodiment of the present disclosure. The communication device 1800 includes a processor 1810. The processor 1810 may call and run a computer program from a memory to enable the communication device 1800 to implement each of the methods in the embodiments of the present disclosure.

In an implementation, the communication device 1800 may further include a memory 1820. Here, the processor 1810 may call and run a computer program from the memory 1820 to enable the communication device 1800 to implement each of the methods in the embodiments of the present disclosure.

Herein, the memory 1820 may be a separate device independent of the processor 1810 or may be integrated in the processor 1810.

In an implementation, the communication device 1800 may further include a transceiver 1830. The processor 1810 may control the transceiver 1830 to communicate with other devices. Specifically, the processor 1810 may control the transceiver 1830 to send information or data to other devices, or receive information or data from other devices.

Herein, the transceiver 1830 may include a transmitter and a receiver. The transceiver 1830 may further include one or more antennas.

In an implementation, the communication device 1800 may be the first device according to the embodiments of the present disclosure, and the communication device 1800 may implement the corresponding processes implemented by the first device in each of the methods according to the embodiments of the present disclosure, which are not described repeatedly herein for the sake of conciseness.

In an implementation, the communication device 1800 may be the second device according to the embodiments of the present disclosure, and the communication device 1800 may implement the corresponding processes implemented by the second device in each of the methods according to the embodiments of the present disclosure, which are not described repeatedly herein for the sake of conciseness.

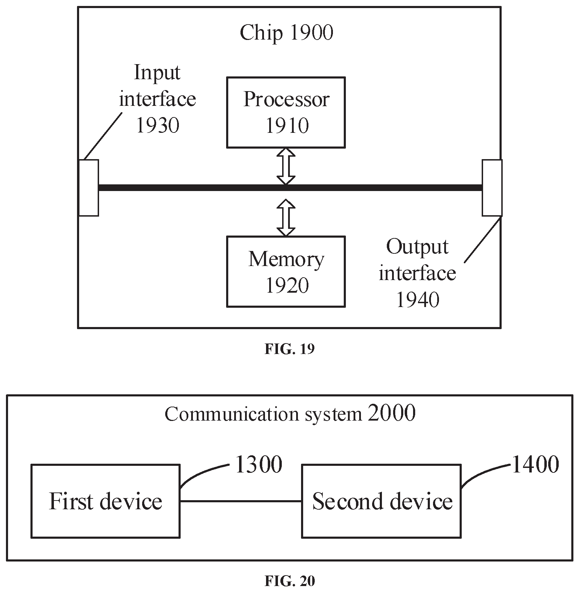

FIG. 19 is a schematic structural diagram of a chip 1900 according to an embodiment of the present disclosure. The chip 1900 includes a processor 1910. The processor 1910 may call and run a computer program from a memory to implement each of the methods in the embodiments of the present disclosure.

In an implementation, the chip 1900 may further include a memory 1920. Here, the processor 1910 may call and run a computer program from the memory 1920 to implement each of the methods performed by the first device or the second device in the embodiments of the present disclosure.

Herein, the memory 1920 may be a separate device independent of the processor 1910 or may be integrated in the processor 1910.

In an implementation, the chip 1900 may further include an input interface 1930. Herein, the processor 1910 may control the input interface 1930 to communicate with other devices or chips, specifically, may acquire information or data from other devices or chips.

In an implementation, the chip 1900 may further include an output interface 1940. Herein, the processor 1910 may control the output interface 1940 to communicate with other devices or chips, specifically, may output information or data to other devices or chips.

In an implementation, the chip may be applied to the first device in the embodiments of the present disclosure, and the chip may implement the corresponding processes implemented by the first device in each of the methods of the embodiments of the present disclosure, which are not described repeatedly herein for the sake of conciseness.

In an implementation, the chip may be applied to the second device in the embodiments of the present disclosure, and the chip may implement the corresponding processes implemented by the second device in each of the methods of the embodiments of the present disclosure, which are not described repeatedly herein for the sake of conciseness.

The chips applied to the first device and the second device may be the same chip or different chips.

It should be understood that the chip mentioned in the embodiments of the present disclosure may also be referred to as a system level chip, a system chip, a chip system, a system-on-chip, and the like.

The aforementioned processor may be a general-purpose processor, a digital signal processor (DSP), a field programmable gate array (FPGA), an application specific integrated circuit (ASIC), or another programmable logic device, a transistor logic device, a discrete hardware component, etc. Herein, the aforementioned general-purpose processor may be a microprocessor or any conventional processor, etc.

The aforementioned memory may be a volatile memory or a non-volatile memory, or may include both the volatile memory and the non-volatile memory. Herein, the non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is illustrative but not restrictive description. For example, in the embodiments of the present disclosure, the memory may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM), etc. That is, the memory in the embodiments of the present disclosure is intended to include but not limited to these and any other suitable types of memories.

FIG. 20 is a schematic block diagram of a communication system 2000 according to an embodiment of present disclosure. The communication system 2000 includes a first device 1300 and a second device 1400.

The first device 1300 sends a plurality of first signals during a first period among a plurality of periods. Herein, during the first period, time-domain positions of the plurality of first signals are different, and powers of the plurality of first signals are different. Each first signal of the plurality of first signals is used to provide energy for a second device 1400 within a coverage range of the first signal, and the energy is used for the second device 1400 to perform data transmission with the first device 1300.

The second device 1400 receives a first signal from the first device 1300 during a first period among a plurality of periods. In a case where a power of the first signal or the energy provided by the first signal satisfies a first condition, the second device 1400 performs data transmission with the first device 1300 based on energy provided by the first signal.

Herein, the first device 1300 may be used to implement the corresponding functions implemented by the first device in the above method(s); and the second device 1400 may be used to implement the corresponding functions implemented by the second device in the above method(s). For the sake of brevity, details are not described herein again.

The above embodiments may be implemented wholly or partially by software, hardware, firmware, or any combination thereof. When implemented by software, the embodiments may be implemented wholly or partially in the form of a computer program product. The computer program product includes one or more computer instructions. When the computer program instruction(s) are loaded and executed on a computer, the processes or functions according to the embodiments of the present disclosure are wholly or partially generated. The computer may be a general-purpose computer, a special-purpose computer, a computer network, or another programmable device. The computer instruction(s) may be stored in a computer-readable storage medium, or transmitted from a computer-readable storage medium to another computer-readable storage medium. For example, the computer instruction(s) may be transmitted from a website, computer, server or data center to another website, computer, server or data center via a wired manner (such as coaxial cable, optical fiber, digital subscriber line (DSL)) or a wireless manner (such as infrared, wireless, microwave, etc.). The computer-readable storage medium may be any available medium that can be accessed by the computer, or a data storage device such as a server or data center that includes one or more integrated available media. The available medium may be a magnetic medium (such as floppy disk, hard disk, or magnetic tape), an optical medium (such as DVD), or a semiconductor medium (such as solid state disk (SSD)), etc.

It should be understood that, in various embodiments of the present disclosure, the size of the sequence numbers of the above processes does not indicate the sequence of execution. The execution sequence of each process should be determined by its function and internal logic, and should not impose any limitation on the implementation process of the embodiments of the present disclosure.

Those skilled in the art can clearly understand that, for convenience and conciseness of the description, the specific working processes of the systems, apparatus, and units described above may refer to the corresponding processes in the aforementioned method embodiments, which will not be described herein.

The above is merely specific implementations of the present disclosure, but the scope of protection of the present disclosure is not limited thereto. Any person skilled in the art may easily think of changes or substitutions within the technical scope disclosed in the present disclosure, which should be covered within the scope of protection of the present disclosure. Therefore, the scope of protection of the present disclosure should be based on the scope of protection of the claims.

## Claims

1. A data transmission method, comprising:
sending, by a first device, a plurality of first signals during a first period among a plurality of periods, wherein, during the first period, time-domain positions of the plurality of first signals are different, and powers of the plurality of first signals are different; each first signal of the plurality of first signals is used to provide energy for a second device within a coverage range of the first signal, and the energy is used for data transmission with the first device.

2. The method of claim 1, wherein, during the first period, a power of each first signal of the plurality of first signals is related to a sending sequence of the plurality of first signals.

3. The method of claim 2, wherein the power of each first signal of the plurality of first signals increases sequentially during the first period.

4. The method of any one of claims 1 to 3, wherein powers of the plurality of first signals sent by the first device during each period of the plurality of periods have an identical sorting rule.

5. The method of any one of claims 1 to 4, further comprising:
sending, by the first device, a trigger message during the first period; wherein the trigger message is used to indicate the second device that detects the trigger message to perform the data transmission with the first device.

6. The method of claim 5, wherein the trigger message comprises resource indication information; and the resource indication information is used for the second device to determine a time-frequency resource for the data transmission with the first device.

7. The method of claim 5, wherein a time-frequency resource of the trigger message is used to determine a time-frequency resource for the data transmission between the second device and the first device.

8. The method of any one of claims 5 to 7, wherein the trigger message further comprises an identifier (ID) of the second device; and the ID is used for the second device to determine that the trigger message is used to indicate the second device to perform the data transmission with the first device.

9. The method of any one of claims 5 to 8, wherein the trigger message is carried by the first signal.

10. The method of any one of claims 1 to 9, further comprising:
sending, by the first device, a second signal during the first period; wherein the second signal is used to indicate to enter a second period among the plurality of periods.

11. The method of claim 10, wherein the second signal comprises timing information, and the timing information is used to determine a time-domain position of the second period.

12. The method of claim 10 or 11, wherein the second signal is further used to indicate the second device to release energy.

13. A data transmission method, comprising:
receiving, by a second device, a first signal from a first device during a first period among a plurality of periods; and
in a case where a power of the first signal or energy provided by the first signal satisfies a first condition, performing, by the second device, data transmission with the first device based on the energy provided by the first signal.

14. The method of claim 13, wherein the first condition comprises at least one of the following:
energy accumulated by the second device based on the first signal is greater than a first threshold; or
the power of the first signal is greater than a second threshold.

15. The method of claim 13 or 14, further comprising:
in a case where the first condition is satisfied, detecting, by the second device, a trigger message from the first device; wherein the trigger message is used to indicate the second device to perform the data transmission with the first device.

16. The method of claim 15, further comprising:
determining, by the second device, a time-frequency resource for the data transmission with the first device based on resource indication information in the trigger message.

17. The method of claim 15, further comprising:
determining, by the second device, a time-frequency resource for the data transmission with the first device based on a time-frequency resource of the trigger message.

18. The method of any one of claims 15 to 17, wherein performing, by the second device, the data transmission with the first device based on the energy provided by the first signal comprises:
in a case where the trigger message comprises an identifier (ID) of the second device, performing, by the second device, the data transmission with the first device based on the energy provided by the first signal.

19. The method of any one of claims 15 to 17, wherein the trigger message is carried by the first signal.

20. The method of any one of claims 13 to 18, further comprising:
receiving, by the second device, a second signal from the first device; wherein the second signal is used to indicate to enter a second period among the plurality of periods.

21. The method of claim 20, further comprising:
determining, by the second device, a time-domain position of the second period based on timing information in the second signal.

22. The method of claim 20 or 21, further comprising:
releasing, by the second device, energy in a case where the second device receives the second signal.

23. A first device, comprising:
a first communication module, configured to send a plurality of first signals during a first period among a plurality of periods, wherein, during the first period, time-domain positions of the plurality of first signals are different, and powers of the plurality of first signals are different; each first signal of the plurality of first signals is used to provide energy for a second device within a coverage range of the first signal, and the energy is used for data transmission with the first device.

24. The first device of claim 23, wherein, during the first period, a power of each first signal of the plurality of first signals is related to a sending sequence of the plurality of first signals.

25. The first device of claim 24, wherein the power of each first signal of the plurality of first signals increases sequentially during the first period.

26. The first device of any one of claims 23 to 25, wherein powers of the plurality of first signals sent during each period of the plurality of periods have an identical sorting rule.

27. The first device of any one of claims 23 to 26, wherein the first communication module is further configured to:
send a trigger message during the first period; wherein the trigger message is used to indicate the second device that detects the trigger message to perform the data transmission with the first device.

28. The first device of claim 27, wherein the trigger message comprises resource indication information; and the resource indication information is used for the second device to determine a time-frequency resource for the data transmission with the first device.

29. The first device of claim 27, wherein a time-frequency resource of the trigger message is used to determine a time-frequency resource for the data transmission between the second device and the first device.

30. The first device of any one of claims 27 to 29, wherein the trigger message further comprises an identifier (ID) of the second device; and the ID is used for the second device to determine that the trigger message is used to indicate the second device to perform the data transmission with the first device.

31. The first device of any one of claims 27 to 30, wherein the trigger message is carried by the first signal.

32. The first device of any one of claims 23 to 31, wherein the first communication module is further configured to:
send a second signal during the first period; wherein the second signal is used to indicate to enter a second period among the plurality of periods.

33. The first device of claim 32, wherein the second signal comprises timing information, and the timing information is used to determine a time-domain position of the second period.

34. The first device of claim 32 or 33, wherein the second signal is further used to indicate the second device to release energy.

35. A second device, comprising:
a second communication module, configured to: receive a first signal from a first device during a first period among a plurality of periods; and perform data transmission with the first device based on energy provided by the first signal, in a case where a power of the first signal or the energy provided by the first signal satisfies a first condition.

36. The second device of claim 35, wherein the first condition comprises at least one of the following:
energy accumulated by the second device based on the first signal is greater than a first threshold; or
the power of the first signal is greater than a second threshold.

37. The second device of claim 35 or 36, further comprising a first processing module, wherein the first processing module is configured to:
in a case where the first condition is satisfied, detect a trigger message from the first device; wherein the trigger message is used to indicate to perform the data transmission with the first device.

38. The second device of claim 37, wherein the first processing module is further configured to:
determine a time-frequency resource for the data transmission with the first device based on resource indication information in the trigger message.

39. The second device of claim 37, wherein the first processing module is further configured to:
determine a time-frequency resource for the data transmission with the first device based on a time-frequency resource of the trigger message.

40. The second device of any one of claims 37 to 39, wherein the second communication module is further configured to:
perform the data transmission with the first device based on the energy provided by the first signal, in a case where the trigger message comprises an identifier (ID) of the second device.

41. The second device of any one of claims 37 to 39, wherein the trigger message is carried by the first signal.

42. The second device of any one of claims 35 to 40, wherein the second communication module is further configured to:
receive a second signal from the first device; wherein the second signal is used to indicate to enter a second period among the plurality of periods.

43. The second device of claim 42, further comprising a second processing module, wherein the second processing module is configured to:
determine a time-domain position of the second period based on timing information in the second signal.

44. The second device of claim 42 or 43, further comprising a third processing module, wherein the third processing module is configured to:
release energy in a case where the second device receives the second signal.

45. A first device, comprising: a transceiver, a processor and a memory, wherein the memory is configured to store a computer program, the transceiver is configured to communicate with other devices, and the processor is configured to call and run the computer program stored in the memory, to enable the first device to perform the method of any one of claims 1 to 12.

46. A second device, comprising: a transceiver, a processor and a memory, wherein the memory is configured to store a computer program, the transceiver is configured to communicate with other devices, and the processor is configured to call and run the computer program stored in the memory, to the second device to perform the method of any one of claims 13 to 22.

47. A chip, comprising: a processor, configured to call and run a computer program from a memory, to enable a device installed with the chip to perform the method of any one of claims 1 to 12.

48. A chip, comprising: a processor, configured to call and run a computer program from a memory, to enable a device installed with the chip to perform the method of any one of claims 13 to 22.

49. A computer-readable storage medium, configured to store a computer program, wherein when the computer program is run by a device, the device is enabled to perform the method of any one of claims 1 to 12.

50. A computer-readable storage medium, configured to store a computer program, wherein when the computer program is run by a device, the device is enabled to perform the method of any one of claims 13 to 22.

51. A computer program product, comprising computer program instructions, wherein the computer program instructions enable a computer to perform the method of any one of claims 1 to 12.

52. A computer program product, comprising computer program instructions, wherein the computer program instructions enable a computer to perform the method of any one of claims 13 to 22.

53. A computer program, wherein the computer program enables a computer to perform the method of any one of claims 1 to 12.

54. A computer program, wherein the computer program enables a computer to perform the method of any one of claims 13 to 22.

55. A communication system, comprising:
a first device, configured to perform the method of any one of claims 1 to 12; and
a second device, configured to perform the method of any one of claims 13 to 22.
